**Europäisches Patentamt**

**European Patent Office**

**Office européen des brevets**

(19)

(11) Veröffentlichungsnummer: **0 123 058**
**A1**

(12)

# EUROPÄISCHE PATENTANMELDUNG

(21) Anmeldenummer: **84102046.4**

(51) Int. Cl.³: **A 01 K 47/00**

(22) Anmeldetag: **28.02.84**

(30) Priorität: **07.03.83 DE 3308009**

(43) Veröffentlichungstag der Anmeldung:
**31.10.84 Patentblatt 84/44**

(84) Benannte Vertragsstaaten:
**AT BE CH FR GB IT LI NL SE**

(71) Anmelder: **Böger, Klaus**
**Wilhelm Levison Strasse 4**
**D-5300 Bonn(DE)**

(72) Erfinder: **Böger, Klaus**
**Wilhelm Levison Strasse 4**
**D-5300 Bonn(DE)**

(54) **Die Bogenbeute.**

(57) Eine Beute muß dem Wabenbau der Honigbiene Halt
geben und ein Flugloch haben.
Der Bogen ist eine Beute für eine Wabe.

EP 0 123 058 A1

0123058

Beschreibung der Erfindung von Klaus Böger

Die Bogenbeute

Eine Beute muß dem Wabenbau der Honigbiene Halt geben und ein Flugloch haben.

Der Bogen ist eine Beute für eine Wabe.

Patentanspruch auf die Erfindung von Klaus Böger

Eine Beute muß dem Wabenbau der Honigbiene Halt geben und
ein Flugloch haben.
Der Bogen ist eine Beute für eine Wabe.
Ich beantrage Patentschutz für die Bogenbeute.

Klaus Böger

0123058

Nummer der Anmeldung

# EUROPÄISCHER RECHERCHENBERICHT

Europäisches Patentamt

EP 84 10 ₄046

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl ³) |
|---|---|---|---|
| X | EP-A-0 071 409 (HULIOT)<br>* Seite 5, Zeile 7 - Seite 6, Zeile 16; Seite 8, Zeile 23 - Seite 9, Zeile 2; Figur 2 *<br><br>-----  | 1 | A 01 K 47/00<br><br><br>RECHERCHIERTE SACHGEBIETE (Int. Cl ³)<br><br>A 01 K |

Der vorliegende Recherchenbericht wurde für alle Patentansprüche erstellt.

| Recherchenort<br>DEN HAAG | Abschlußdatum der Recherche<br>18-05-1984 | Prüfer<br>VILBIG K |
|---|---|---|